# EUROPEAN PATENT SPECIFICATION

(11) **EP 3 193 158 B1**
(45) Date of publication and mention of the grant of the patent: **17.06.2020**
(21) Application number: 16151243.9
(22) Date of filing: 14.01.2016
(51) Int. Cl.: G01N 21/25, G01N 21/55, G01N 21/57, G01N 21/01, G01N 21/88

(54) **SYSTEM AND METHOD FOR ASSESSING THE VISUAL APPEARANCE OF A REFLECTIVE SURFACE**
SYSTEM UND VERFAHREN ZUR BEURTEILUNG DES VISUELLEN ERSCHEINUNGSBILDES EINER REFLEKTIERENDEN OBERFLÄCHE
SYSTÈME ET PROCÉDÉ POUR L'ÉVALUATION DE L'ASPECT VISUEL D'UNE SURFACE RÉFLÉCHISSANTE

(43) Date of publication of application: 19.07.2017
(73) Proprietor: Volkswagen AG, 38440 Wolfsburg (DE); Rhopoint Instruments Ltd., St. Leonards on Sea TN38 9AG (GB); AUDI AG, 85045 Ingolstadt (DE)
(72) Inventor: Christen, Klaus, 38524 Sassenburg (DE); Weißberg, Dirk, 30938 Burgwedel (DE); Roths, Klaus, 48630 Ahaus (DE); Burrows, Anthony David, Otford, Kent (GB); Morandi, Pierre, 86360, Chasseneuil-du-Poitou (FR); Dauser, Thomas, 85072 Eichstätt (DE)
(74) Representative: Gulde & Partner

(56) References cited:
- US-A- 4 846 578
- US-A- 5 155 558
- US-A- 5 589 904
- US-A1- 2014 043 602
- Rhopoint Instruments: "Rhopoint NOVO-GLOSS - specification", , 1 November 2013 (2013-11-01), XP055294666, Retrieved from the Internet: URL:http://www.rhopointinstruments.com/ima ges/pdfs/Rhopoint%20-%20Novo-Gloss%20Gloss meters%20-%20German.pdf [retrieved on 2016-08-10]
- Daniela Florian ET AL: "Implementation of real time auto focus methods for static and dynamic infrared imaging of power semiconductor chips", Proceedings of the 11th International Conference on Quantitative InfraRed Thermography, 11 June 2012 (2012-06-11), XP055296340, Naples, Italy Retrieved from the Internet: URL:https://pervasive.aau.at/publications/ pdf/QIRT-2012-Wischounig_205.pdf [retrieved on 2016-08-18]
- Andor ET AL: "CCD Spatial Resolution", , 20 March 2013 (2013-03-20), XP055296344, Retrieved from the Internet: URL:http://www.andor.com/learning-academy/ ccd-spatial-resolution-understanding-spati al-resolution [retrieved on 2016-08-18]
- Stefan Werling ET AL: "METROLOGY AND MEASUREMENT SYSTEMS INSPECTION OF SPECULAR AND PARTIALLY SPECULAR SURFACES", , 2 October 2009 (2009-10-02), XP055294617, Retrieved from the Internet: URL:http://www.metrology.pg.gda.pl/full/20 09/M&MS_2009_415.pdf [retrieved on 2016-08-10]

## Description

The invention refers to a system for assessing the visual appearance of a reflective surface and a method of assessing the visual appearance of a reflective surface, wherein the system is used.

Reflective surfaces are comprised by a variety of products, such as furniture, white goods, electronics or vehicles. Assuring the quality of such reflective surfaces is an important matter in the respective industries in order to meet customer requirements.

### State of the art

It is well known in the art to apply measurement techniques in order to detect certain objective quality parameters of a reflective surface. Some examples are waviness, roughness, color intensity or the distinctness of image (DOI) once an image is reflected by the reflective surface. These and other objective quality parameters can be derived from measurement data. Just as an example, a color intensity of a reflective surface can be detected by a photo sensor sensitive to a certain wavelength. Here, light reflected by the reflective surface reaching the photo sensor can be turned into a voltage signal representing the wavelength. The objective quality parameter can then be expressed as a certain intensity level of the voltage signal regarding this wavelength.

From the technical point of view, objective quality parameters are proper to fully determine the quality of a reflective surface. Therefore they are highly applicable to assure a certain quality standard throughout the entire production of a number of reflected surfaces, for example in series production.

DE 10 2008 038 256 A1 discloses a device for optical inspection of a surface of an automobile. A pattern is displayed by an LCD-display and reflected by the surface of the automobile. The reflected patterns are detected by a camera and processed by a control and processing unit. From the processed data objective quality parameters of the surface are derived, such as waviness.

In DE 102 91 985 B4 a method of examining a surface structure is objected. A housing, comprising a number of light sources, is used to illuminate a segment of the surface structure successively from different relative positions. Different pictures are captured by a camera. Thus, independent data sets are created. Information about the surface structure is gained from these independent data sets. Failure effects influencing the pictures are then reduced by combining information from the independent data sets.

In US 5 142 648 A another method of inspecting a painted surface is disclosed. The method is based on the processing of camera images, determining the modulation transfer function and quantifying the DOI.

US 5 155 558 A and US 4 846 578 A describe further examples of a method and an apparatus for analyzing the appearance features of a surface.

A further approach of determining the quality of reflective surfaces refers to assess visual appearance of the reflective surface. The term visual appearance, in contrast to the term objective quality parameters, refers to the subjective human perception of the reflective surface. Subjectivity implies that there is no objective parameter suitable to describe the visual appearance. That is why it has been practiced in the art to assess the visual appearance by manual visual inspection.

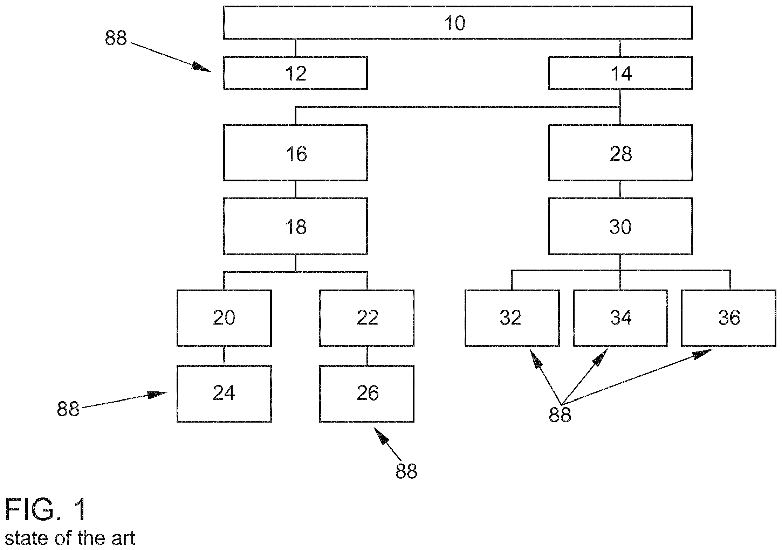

It is known in the art that some correlation between objective quality parameters of an item and visual appearance of the item exists. In other words, some objective quality parameters, such as waviness, are known as influencing factors on the visual appearance of the item to a human being. However, this correlation differs from one human being to the other. Therefore, the correlation is only a qualitative correlation. An overview of the objective quality parameters acting as influencing factors on the visual appearance of an item is illustrated in Figure 1.

### Disclosure of the invention

It is an objective of the invention to develop a technical system that is capable of automatically assessing the visual appearance of a reflective surface in an easy, fast and flexible manner.

The invention refers to a system for assessing the visual appearance of a reflective surface, comprising at least:
a) a visual output device, adapted to display at least one test image onto the reflective surface;
b) a visual capturing device, comprising an adjustable focal point position;
   - wherein the adjustable focal point position is tunable to the reflective surface as one capturing position and to a complementary capturing position that allows for clear capturing of the test image as a reflection from the reflective surface; and
   - wherein the visual capturing device is adapted to capture at least one image in the one capturing position and to capture at least one complementary image in the complementary capturing position;
c) a data processing unit, comprising a database and an evaluation algorithm;
   - wherein the database is equipped with data representing correlation between visual appearance of reflective reference surfaces and objective quality parameters; and
   - wherein the evaluation algorithm is adapted to derive the objective quality parameters of the reflective surface from the one image and from the complementary image and to compare the objective quality parameters with the data of the database to assess visual appearance of the reflective surface based on average human perception.

According to the invention, the data of the database comprise logical conjunction of:
- statistically confirmed results of target group interrogation regarding visual appearance of reflective reference surfaces; and
- objective quality parameters.

The test image or the test images are preferably fringe patterns, blocks, lines, circles or other test images known in the art that are applicable to analyze certain objective quality parameters of a reflective surface. Displaying such test images onto the reflective surface and capturing an image of the reflective surface including a reflection of the test image allows for deriving a number of objective quality parameters from the captured image. These objective quality parameters include unevenness in different orders of magnitude, such as sharpness, roughness, contrast, global waviness, waviness in a shortwave range and waviness in a longwave range. Further derivable objective quality parameters are a specular gloss, haze or DOI of the test image as the reflection from the reflective surface. In general, all these objective quality parameters can be analyzed in different orders of magnitude and are mentioned in Figure 1. To a person skilled in the art it is well known how to measure the objective quality parameters mentioned by means of picture capturing.

The system comprises all technical means necessary to capture the one image in the one capturing position and to capture the complementary image in the complementary capturing position so that the one image and the complementary image as a combination embody all information required to derive at least those objective quality parameters shown in Figure 1. This means that the information embodied by the complementary image is complementary to the information embodied by the one image regarding these objective quality parameters of an identic area of the reflective surface. On the one hand this implies that in the one capturing position the adjustable focal point position needs to be tuned onto the reflective surface. In case of a non-planar surface the adjustable focal point position is tuned on a plane representing the reflective surface which is a well known procedure in measurement engineering. On the other hand this implies that in the complementary capturing position the adjustable focal point position needs to be tuned so as to allow for clear capturing of the test image as a reflection from the reflective surface. In other word the adjustable focal point position needs to be tuned on the test image in the complementary focal point position. A distance from the visual capturing device to its adjustable focal point position tuned to the complementary capturing position is equivalent to a distance from the visual capturing device to the reflective surface in addition to a distance from the reflective surface to the visual output device. The term clear capturing of the test image means that the adjustable focal point position is tuned in way so that the test image appears as sharp as possible. This state indicates that the adjustable focal point position is correctly tuned to the complementary capturing position.

It is important to the system of the invention that the visual capturing device is adapted to capture at least the one image and the complementary image as stated above. It is further important to the system of the invention that the evaluation algorithm is adapted to derive the objective quality parameters from the one image and the complementary image shown in Figure 1. Preferably, objective quality parameters are derived that occur at certain orders of magnitude of a wavelength. In other words, each objective quality parameter is detectable or derivable at a wavelength of a certain order of magnitude, which means power of ten (10^{x}). The order of magnitude of this wavelength preferably ranges from 10⁻³ mm to 10¹ mm, depending on the objective quality parameter to be derived from the respective image. Just as an example, gloss effects can be detected at a wavelength of 0.002 mm. Just as another example, orange peel effects can be detected at a wavelength of 30 mm. Preferably a variety of orders of magnitude of a wavelength is analyzed. This advantageously allows for making all objective quality parameters detectable that are relevant for the assessment of the visual appearance of a certain reflective surface. Preferably 2 to 15 orders of magnitude of a wavelength are analyzed, further preferred 4 to 13, further preferred 6 to 12, further preferred 8 to 11 and further preferred 9 to 10.

It is further important to the system of the invention that the database is equipped with data representing correlation between visual appearance of reflective reference surfaces and objective quality parameters. Therefore the data comprise empirically investigated correlation of the average human perception of a variety of reflective reference surfaces comprising determined objective quality parameters. The device of the invention is therefore capable of assessing the visual appearance of a given reflective surface by determining the objective quality parameters and comparing them with the data.

It is an advantage of the device of the invention that the device is capable of automatically assessing the visual appearance of a given reflective surface. Compared to conventional manual visual assessment this advantageously increases the of the assessment due to the implemented information about the average human perception of reflected reference surfaces. The term accuracy refers to validity of the assessment in real life as well as reproducibility. In case of the manual visual assessment the visual appearance is always determined by the opinion of a single person. Furthermore the device of the invention advantageously decreases the effort for the assessment of visual appearance. Another advantage is that more reflective surfaces can be assessed in the same time. Assessment of the visual appearance by the system of the invention is much faster than by manual visual inspection. It is advantageously not necessary to move the system across the reflective surface as all objective quality parameters are derived from images. The system of the invention is also highly flexible as its ability of assessing the visual appearance of different reflective surface is scalable by adapting the data stored in the database.

Group interrogation is known in the field of human behavioral studies. Research has revealed that proper data regarding the correlation between visual appearance of reflective reference surfaces and objective quality parameters can be gained by transferring this method to measurement engineering. Correlation between visual appearance of reflective reference surfaces and objective quality parameters can be revealed the following steps: First, a number of reflective reference surfaces comprising the entire spectrum of characteristics of objective quality parameters that may occur in a certain field, for example automotive skin panel parts, is manufactured. Then, a number of test people representing a certain customer target group can is chosen. For example, a customer target group can represent an average consumer, a business customer or a proficient customer. The reflective reference surfaces are then assessed by each one of the test people of a customer target group regarding its visual appearance. The results of this manual visual assessment is then logically interlinked with the known manufactured characteristics of the objective quality parameters. As a result, a certain combination of quantified characteristics of one or more objective quality parameters leads to a certain visual appearance as it is, at an average, sensed by the target group. The number of test people is chosen accordingly, as to assure statistic validity of the results.

This advantageously increased the accuracy and flexibility of the system of the invention. The possibility of adjusting the assessment of visual appearance executed by the system of the invention to a specific customer target group is one more striking advantage.

In a preferred embodiment of the system of the invention the data processing unit comprises a control algorithm adapted to automatically control the steps of:
a) displaying the at least one test image;
b) tuning the adjustable focal point position to the one capturing position;
c) capturing at least one image in the one capturing position;
d) tuning the adjustable focal point position to the complementary capturing position;
e) capturing at least one complementary image in the complementary capturing position;
f) deriving objective quality parameters of the reflective surface from the one image and from the complementary image;
g) comparing the objective quality parameters with the data of the database to assess visual appearance of the reflective surface; and
h) outputting a result representative for visual appearance of the reflective surface .

The sequence of the steps a) to f) is not limited to the sequence stated above. All sequences that are technically reasonable in order to come to step g) and finally h) are concerned by the invention.

This embodiment of the system of the invention advantageously increases the speed of assessing the visual appearance.

Preferably, the control algorithm is adapted to:
- repeat the steps a) to g) using different test images; and
- combining results of all iterations of step g); and
- outputting a result representative for visual appearance of the reflective surface .

Here, it is an advantage of the system of the invention that the accuracy of the assessment is significantly increased. For example, it is possible to compensate for measurement mistakes by the use of different test images. Furthermore, the use of different test images allows for adaption of the test images to the given reflective surface. An advantage of the system is that the possibility of using different test images allows the use of known optical test methods such as optical transfer function, point spread function, line spread function and image analysis associated with defect detection and image distortion.

In a preferred embodiment of the system of the invention the system comprises a contact section adapted to position the system on the reflective surface.

This advantageously allows for easy and accurate positioning of the system relative to the reflective surface to be assessed. Especially a distance between the system and the reflective surface can be kept at a constant state this way. Furthermore, vibrations from the environment can be eliminated. All this increases the accuracy of the assessment.

In a preferred embodiment of the system of the invention the visual capturing device comprises a mechanism, adapted to automatically tune the adjustable focal point position. Preferably the visual capturing device comprises a lens system with an actuator to adjust the relative position of the lenses.

This advantageously makes the tuning of the adjustable focal point position accurate, fast and easy.

For example, the lens system may comprise one ore more lenses with each lens comprising individual optical properties. In the art, lenses with various optical properties are well known. It is further known in the art to design lens systems with adapted optical properties. Regarding the system of the invention it is, for example, possible to use one or more lenses comprising a fixed focal length. The adjustable focal position of the visual capturing device may then, just as an example, be tuned by moving the visual capturing device itself. Another example is to use one or more lenses with an additional collimation functionality. This allows for tuning the adjustable focal position of the visual capturing device by adjusting the relative position of the lenses. All this allows to measure objective quality parameters required for the assessment of the visual appearance of a variety of reflective surfaces. Furthermore one or more lenses with a variable focal length can be used. Such lenses are well known in the art. Here, fluid lenses are only one example. In this case, the investigated reflective surface can be analyzed at different levels of magnification and consequently different levels of spatial resolution. As an example, a higher spatial resolution allows for detecting the reflective surface or a reflection coming from the reflective surface at a higher level of details. A lower spatial resolution allows for detecting the reflective surface or a reflection coming from the reflective surface at a lower level of details. This way, the spatial resolution can advantageously be adapted with regard to the specific objective quality parameters to be measured.

In a preferred embodiment of the system of the invention the visual capturing device is adapted to allow for capturing of the one image in the one capturing position and the complementary image in the complementary capturing position so that an area of the reflective surface covered by (each) the one image and the complementary image measures at least 20 mm by 10 mm, preferably at least 22.5 mm by 13 mm, even more preferably 25.3 mm by 16.1 mm and further preferred up to 30 mm by 20 mm.

This advantageously assures that the area of the reflective surface that is captured in the one image and in the complementary image comprises all visual surface effects sensible by a human being from a distance to the reflective surface of 0.1 m to 3 m. This is the range that is commonly relevant for a human being visually assessing the quality of a reflective surface. If a smaller area of the reflective surface is covered not all of the relevant effects are comprised by this area. If a larger area of the reflective surface is covered the effort of assuring a sufficient resolution will grow too high, taking state-of-the-art means of picture capturing into account.

In a preferred embodiment of the system of the invention the visual capturing device is adapted to tune the adjustable focal point position with an accuracy of at least +/- 0.3 mm, further preferred at least +/- 0.2 mm, even more preferred at least +/- 0.1 mm and further preferred at least +/- 0,01 mm. The term at least means that a better accuracy is always desired and only limited by the available technical means. It is trivial to say that an accuracy of +/- 0 mm, which would be an optimum, is not technically possible.

Research has revealed that the minimum accuracy mentioned above is sufficient for generating assessment results of reflective surfaces that meet the requirements in many industries, such as the automotive industry.

In a preferred embodiment of the system of the invention the adjustable focal point position is tunable in less than 500 ms, preferably less than 400 ms and even more preferably less than 300 ms. It is trivial to say that a tuning time of 0 ms, which would be an optimum, is not technically possible. Still, it is desirable to reduce this time as far as possible to reduce the time necessary for assessment of the visual appearance.

Mostly preferred the adjustable focal point position is tunable in less 300 ms. This advantageously allows for fast assessment of visual appearance that meets the requirements of real time assessment in combination with acceptable technical effort.

In a preferred embodiment of the system of the invention the visual capturing device comprises an image sensor comprising a pixel size of less than 50 µm, preferably less than 30 µm, further preferred less than 20 µm and even more preferred less than 10 µm. It is trivial to say that a pixel size of 0 µm, is not technically possible, nor is it technically reasonable a no sensitive surface of the sensor would be left to capture an image. Still, it is desirable to reduce the pixel size as far as possible in order to increase the resolution of the images.

In a preferred embodiment of the system of the invention the system is a hand-held unit.

This leads to a number of significant advantages. One advantage is that the flexibility is increased as the hand-held unit is easily portable. Therefore it is applicable in many stages of a production process and for interims, final or even after-sales inspection. Another advantage is that the hand-held unit, as it is held and operated by a human, simulates the perspective of the operating human.

Preferably, dimensions of the system measure not more than 200 mm by 150 mm by 60 mm and/or a weight of the system measures not more than 1.5 kg and/or the system comprises an energy source. It is trivial to say that minimum dimensions and weights of the system depend on the existing technical means and on ergonomic requirements.

Research has revealed that maximum dimensions and the maximum weight as stated above meet ergonomic requirements of most operators.

In a preferred embodiment of the system of the invention the system comprises at least one of the following elements:
- a display as a feature of the visual output device;
- a camera as a feature of the visual capturing device;
- a microprocessor as a feature of the data processing unit;
- a graphical user interface;
- means of wireless communication.

The display of the visual output device preferably is an LCD display featuring a high brightness to advantageously reduce the acquisition time. The camera preferably is a state-of-the-art machine vision camera with a custom variable focus lens. These cameras are well know in the field of automation engineering. The data processing unit preferably is an industrial micro computer. It preferably comprises state-of-the-art interfaces, such as USB & Ethernet. External data storage is preferably by micro SD or USB data devices. The graphical user interface preferably comprises another display, preferably an LCD display and an input device, preferably a capacitive keypad. The means of communication preferably comprise state-of-the-art interfaces, such as USB, Bluetooth, QI code reader, QR code reader, RFID reader and other interfaces known in the art.

For example, once a reflective surface is assessed, an identification number of the reflective surface can be detected by an RFID reader of the system of the invention. A result of the assessment can then be transmitted to an external system, for example via WLAN.

The invention further refers to the use of the system according to the invention for assessing the visual appearance of a reflective surface of a vehicle.

This allows for fast, easy, flexible and accurate assessment of the visual appearance of the reflective surface of a vehicle. For example, the vehicle can be a car and the reflective surface can be a skin panel part of the car.

All advantages of the use of the invention are based on the advantages of the system of the invention as described above.

The definition of the terms regarding the system of the invention as stated above are valid for the use of the invention, as well.

The invention further refers to a method for assessing the visual appearance of a reflective surface of a vehicle, the method comprising providing a system according to the invention, and the method further comprising at least the steps of:
a) positioning a contact section of the system on the reflective surface of the vehicle;
b) displaying at least one test image onto the reflective surface by the visual output device of the system;
c) tuning an adjustable focal point position of the visual capturing device of the system to the reflective surface as one capturing position;
d) capturing at least one image in the one capturing position by the visual capturing device;
e) tuning the adjustable focal point position to a complementary capturing position that allows for clear capturing of the test image as a reflection from the reflective surface;
f) capturing at least one complementary image in the complementary capturing position by the visual capturing device;
g) deriving objective quality parameters of the reflective surface from the one image and from the complementary image by the evaluation algorithm of the data processing unit of the system; and
h) comparing the objective quality parameters with the data of the database of the data processing unit representing correlation between the visual appearance of reflective reference surfaces and the objective quality parameters of the reflective reference surfaces by the evaluation algorithm to assess the visual appearance of the reflective surface based on average human perception.

Further preferred embodiments of the system of the invention and of the method of the invention are described in the depending claims.

The different embodiments of the system and of the method of the invention disclosed in this application can advantageously be combined as long as nothing is said regarding the contrary. The invention is further described by the following embodiments in combination with the Figures referring to the respective embodiment.

The Figures illustrate the following:
- Figure 1: overview of objective quality parameters acting as influencing factors on the visual appearance of an item (state of the art);
- Figure 2: a preferred embodiment of a system for assessing the visual appearance of a reflective surface according to the invention and a preferred embodiment of a method of assessing the visual appearance of a reflective surface of a vehicle, wherein a system according to the invention is used; and
- Figure 3: another preferred embodiment of a system for assessing the visual appearance of a reflective surface according to the invention.

Figure 1 illustrates an overview of objective quality parameters acting as influencing factors on the visual appearance of an item according to state of the art. Visual appearance 10 is influenced by a color 12 as a first one of the objective quality parameters 88 and by a gloss 14 of the item. The gloss 14 of the item is influenced by a number of influencing factors that are observable by observing a surface of the item itself, which means focusing the surface of the item 16. These influencing factors are included in a waviness 18 of the surface of the item and are observable at different orders of magnitude of the wavelength. The major orders of magnitude are commonly referred to as longwave spectrum 20 and shortwave spectrum 22. The longwave spectrum 20 reveals a second one of the objective quality parameters 88 commonly referred to in the art as orange peel 24. The shortwave spectrum 22 reveals a third one of the objective quality parameters 88 commonly referred to in the art as a microwaviness 26. The gloss 14 of the item is further influenced by influencing factors that are detectable by observing an image that is reflected by the surface of the item. This means focusing a reflection of the image 28. Here, the DOI 30 of the image can be determined. It incorporates three more objective quality parameters 88 which are commonly referred to in the art as specular gloss 32, haze 34 and clarity 36 of the reflected image.

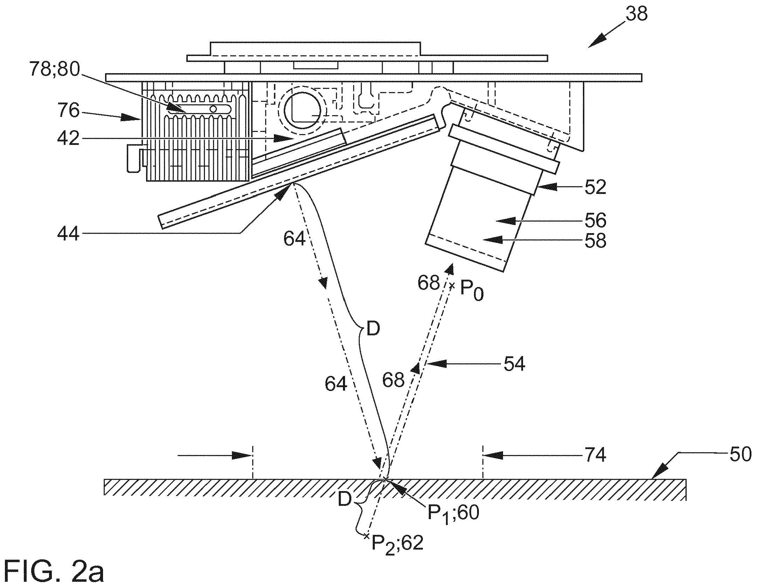

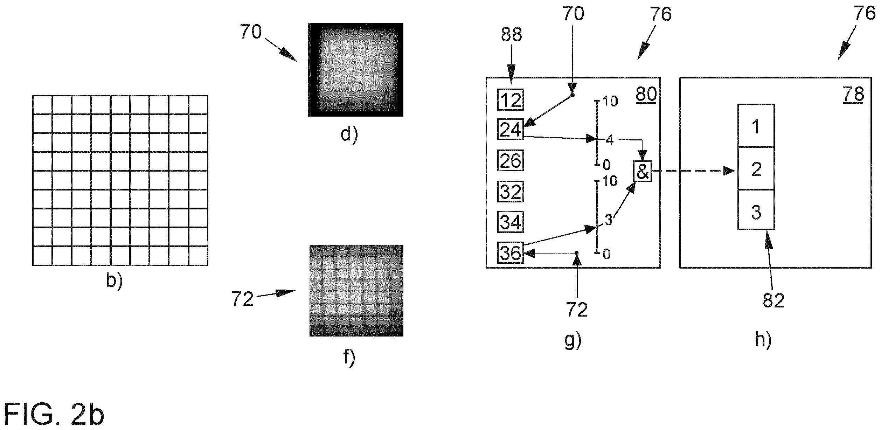

Figure 2 illustrates a preferred embodiment of a system for assessing the visual appearance of a reflective surface according to the invention along with a preferred embodiment of a method of assessing the visual appearance of a reflective surface of a vehicle, wherein a system according to the invention is used. For reasons of clarity, the content of Figure 2 is allocated to Figure 2a and Figure 2b. Figure 2a primarily emphasizes aspects of the design of the system, Figure 2b primarily emphasizes aspects of the method. However, Figure 2a and 2b need to be considered as a unit.

In the preferred embodiment of the system 38 shown in Figure 2a a visual output device 42 is shown. The visual output device 42 comprises a display 44. The visual output device 42 is adapted to display a variety of different test images 64. The display 44 is a high brightness LCD screen in this embodiment. As further shown in Figure 2a, the visual output device 42 is adapted to display the test images 64 onto the reflective surface 50. Displaying the test image 64 onto the reflective surface 50 by the visual output device 42 matches step b) of the method of the invention. Just as an example, the one test image 64, displayed onto the reflective surface in step b) of the method of the invention, is illustrated in Figure 2b.

The system 38 shown in Figure 2a further comprises a visual capturing device 52. The visual capturing device 52 has an adjustable focal point position 54. The adjustable focal point position 54 is adjustable in a range from a point P₀ to P₂. P₀ marks a point closest to the visual capturing device 52, the adjustable focal point position 54 can be tuned to. P₀ can be defined at any position in an interior of the system 38. P₀ is predominantly determined by functional boundaries of the following features: a mechanism 56 of the system 38, adapted to automatically tune the adjustable focal point position 54, and by specifications of a lens system 58, adapted to capture images. Point P₁ marks a point where the adjustable focal point position 54 hits the reflective surface 50, or in other words where it hits a plain representing the reflective surface 50. P₂ lies in a distance D measured from P₁ to P₂. D is equal to a distance from the display 44 of the visual output device 42 to P₁. The distance from the display 44 of the visual output device 42 to P₁ can be chosen by the person skilled in the art according to technical specifications of the system 38, taking into account that a sufficiently large area 74 on the reflective surface 50 needs to be assessable by the system 38.

The adjustable focal point position 54 tuned to P₁ represents one capturing position 60 of the visual capturing device 52. The adjustable focal point position 54 tuned to P₂ represents a complementary capturing position 62.

Each one of the test images 64 displayed onto the reflective surface 50, according to step b) of the method of the invention, is mirrored as a reflection 68 in the direction of the visual capturing device 52. Only for reasons of clarity the arrows in Figure 2a indicating the reflections 68 and the adjustable focal point position 54 are illustrated displaced from one another.

The visual capturing device 52 is adapted to tune the adjustable focal point position 54 to the one capturing position 60 and to capture at least one image 70 in the one capturing position 60. This represents steps c) and d) of the method of the invention. Further, the visual capturing device 52 is adapted to tune the adjustable focal point position 54 to the complementary capturing position 62 and to capture at least one complementary image 72 in the complementary capturing position 62. This represents step e) and f) of the method of the invention. The one image 70 and the complementary image 72 captured, show the area 74 of the reflective surface 50 and the reflection 68. This is accomplished for each one of the test images 64 reaching the visual capturing device 52 as a reflection 68. As an example, one image 70 and one complementary image 72 as captured in steps d) and f) of the method of the invention are illustrated in Figure 2b.

The system 38 shown in Figure 2a comprises a data processing unit 76 comprising an evaluation algorithm 80. The evaluation algorithm 80 is adapted to derive objective quality parameters 88 of the reflective surface 50 from the one image 70, which are color 12, orange peel 24 and microwaviness 26 of the reflective surface 50. The evaluation algorithm 80 is further adapted to derive objective quality parameters 88 of the reflective surface 50 from the complementary image 72, which are color 12, specular gloss 32, haze 34 and clarity 36 of the reflection 68 of the at least one test image 66 reflected by the reflective surface. This represents step g) of the method of the invention. This step g) is illustrated in Figure 2b. Just as an example, the evaluation algorithm 80 derives the orange peel 24 of the reflective surface 50 from the one image 70 and derives the clarity 36 of the reflection 68 of the test image 66 from the complementary image 72. The evaluation algorithm 80 quantifies characteristics of these objective quality parameters 88 on a scale from 0 to 10. In this example, the orange peel 24 is characterized by a value of 4 and the clarity 36 is characterized by a value of 3. Analogically, the evaluation algorithm 80 does so for the color 12, the microwaviness 26, the specular gloss 32 and the haze 34 as additional objective quality 88 parameters.

The data processing unit 76 of the system 38 shown in Figure 2a comprises a database 78. The database 78 is equipped with data 82 representing correlation between visual appearance of reflective reference surfaces and the objective quality parameters 88. As shown in Figure 2b, the characteristics of the objective quality parameters 88 from step g) of the method of the invention are compared with the data 82 by the evaluation algorithm 80 in step h) of the method of the invention. Just as an example, the characteristics of the objective quality parameters 88 are logically interlinked in step g) and the specific combination is matched with a corresponding visual appearance of a reflective reference surface in step h). In the given example, this leads to a value of 2 on a scale for the visual appearance included in the data 82. For example a value of 2 could represent an average visual appearance from a proficient customer's point of view. A value of 1 could represent a good visual appearance and a value of 3 could represent a bad visual appearance.

A result is then given out by the system, for example by a graphical user interface 86. The result could be that the reflective surface 50 features an average/normal visual appearance from a proficient customer's point of view.

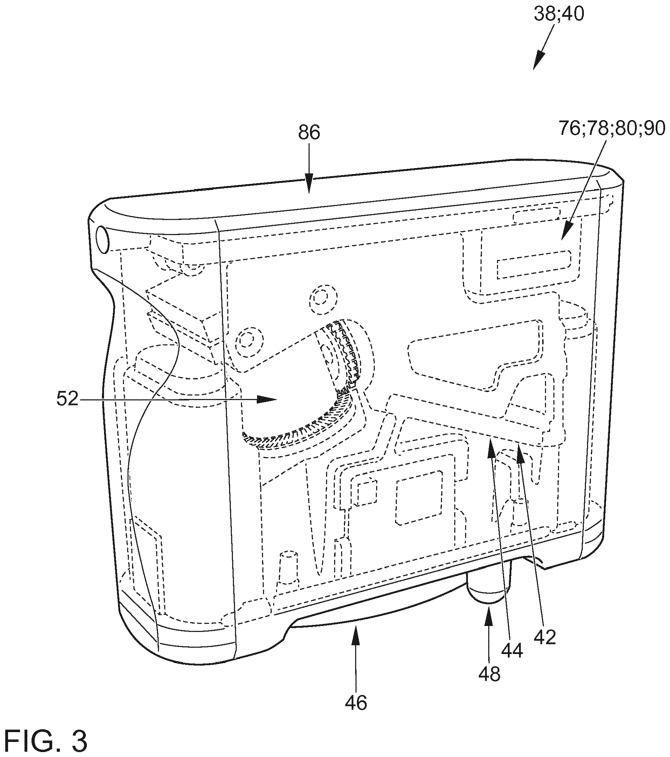

Figure 3 illustrates another preferred embodiment of a system for assessing the visual appearance of a reflective surface according to the invention. The system is based on the system 38 in Figure 2. Therefore, the same reference signs are applicable.

In this embodiment the system 38 is designed as a hand-held unit 40. The hand-held unit 40 comprises a case-like design. The hand-held unit 40 features all important aspects of the system 38 of the invention: the visual output device 42, comprising an internal display 44, the visual capturing device 52, which is an machine camera in this embodiment and the data processing unit 76. The data processing unit is an industrial micro computer in this embodiment and comprises the database 78, the evaluation algorithm 80 and a control algorithm 90. The control algorithm 90 is adapted to control all functionalities of the hand-held unit 40 which means functionalities of the system 38. The hand-held unit 40 comprises a graphical user interface 86 with an input and output function. Further, there is a measurement window 46.

Through the measurement window 46 fight is able to enter or to leave an interior of the hand-held unit 40. The hand-held unit 40 comprises a contact section 48. The contact section 48 allows for positioning the hand-held unit 40, which means the system 38, on a reflective surface 50 as indicated in Figure 2. Preferably the hand-held unit 40 comprises means of wireless communication to allow for detection of workpieces featuring the reflective surface 50.

### List of reference numbers

- 10: visual appearance
- 12: color
- 14: gloss
- 16: focusing the surface of the item
- 18: waviness
- 20: longwave spectrum
- 22: shortwave spectrum
- 24: orange peel
- 26: microwaviness
- 28: focusing a reflection of the image
- 30: DOI
- 32: specular gloss
- 34: haze
- 36: clarity
- 38: system
- 40: hand-held unit
- 42: visual output device
- 44: display
- 46: measurement window
- 48: contact section
- 50: reflective surface
- 52: visual capturing device
- 54: adjustable focal point position
- 56: mechanism
- 58: lens system
- 60: one capturing position
- 62: complementary capturing position
- 64: test images
- 68: reflection
- 70: one image
- 72: complementary image
- 74: area
- 76: data processing unit
- 78: database
- 80: evaluation algorithm
- 82: data
- 86: graphical user interface
- 88: objective quality parameters
- 90: control algorithm
- D: distance
- P₀: point
- P₁: point
- P₂: point

## Claims

1. System (38) for assessing the visual appearance of a reflective surface (50), comprising at least:
a) a visual output device (42), adapted to display at least one test image (66) onto the reflective surface (50);
b) a visual capturing device (52), comprising an adjustable focal point position (54);
- wherein the adjustable focal point position (54) is tunable to the reflective surface (50) as one capturing position (60) and to a complementary capturing position (62) that allows for clear capturing of the test image (66) as a reflection (68) from the reflective surface (50); and
- wherein the visual capturing device (52) is adapted to capture at least one image (70) in the one capturing position (60) and to capture at least one complementary image (72) in the complementary capturing position (62);
c) a data processing unit (76), comprising a database (78) and an evaluation algorithm (80);
- wherein the database (78) is equipped with data (82) representing correlation between visual appearance of reflective reference surfaces and objective quality parameters (88) of the reflective reference surfaces; and
- wherein the evaluation algorithm (80) is adapted to derive the objective quality parameters (88) of the reflective surface (50) from the one image (70) and from the complementary image (72) and to compare the objective quality parameters (88) with the data (82) of the database (78) to assess the visual appearance of the reflective surface (50) based on average human perception, wherein
the data (82) of the database (78) comprise logical conjunction of:
- statistically confirmed results of target group interrogation regarding visual appearance of reflective reference surfaces; and
- objective quality parameters (88) of the reflective reference surfaces.

2. System according to claim 1, wherein the data processing unit (78) comprises a control algorithm (90) adapted to automatically control the steps of:
a) displaying the at least one test image (66);
b) tuning the adjustable focal point position (54) to the one capturing position (60);
c) capturing at least one image (70) in the one capturing position (60);
d) tuning the adjustable focal point position (54) to the complementary capturing position (62);
e) capturing at least one complementary image (72) in the complementary capturing position (62);
f) deriving objective quality parameters (88) of the reflective surface (50) from the one image (70) and from the complementary image (72);
g) comparing the objective quality parameters (88) with the data (82) of the database (78) to assess visual appearance of the reflective surface (50); and
h) outputting a result representative for visual appearance of the reflective surface (50).

3. System according to claim 2, wherein the control algorithm (90) is adapted to:
- repeat the steps a) to g) using different test images (64); and
- combining results of all iterations of step g); and
- outputting a result representative for visual appearance of the reflective surface (50).

4. System according to one of the preceding claims, comprising a contact section (48) adapted to position the system (38) on the reflective surface (50).

5. System according to one of the preceding claims, wherein the visual capturing device (52) comprises a mechanism (56), adapted to automatically tune the adjustable focal point position (54).

6. System according to one of the preceding claims, wherein the visual capturing device (52) is adapted to allow for capturing of the one image (70) in the one capturing position (60) and the complementary image (72) in the complementary capturing position (62) so that an area (74) of the reflective surface (50) covered by the one image (70) and the complementary image (72) measures 20 mm by 10 mm to 30 mm by 20 mm.

7. System according to one of the preceding claims, wherein the visual capturing device (52) is adapted to tune the adjustable focal point position (54) with an accuracy of at least +/- 0.3 mm.

8. System according to one of the preceding claims, wherein the adjustable focal point position (54) is tunable in less than 500 ms.

9. System according to one of the preceding claims, wherein the visual capturing device (52) comprises an image sensor comprising a pixel size of less than 50 µm.

10. System according to one of the preceding claims, wherein the system (38) is a hand-held unit (40).

11. System according to claim 10, wherein dimensions of the system (38) measure not more than 200 mm by 150 mm by 60 mm and/or a weight of the system (38) measures not more than 1,5 kg and/or the system (38) comprises an energy source.

12. System according to one of the preceding claims, wherein the system (38) comprises at least one of the following elements:
- a display as a feature of the visual output device (42);
- a camera as a feature of the visual capturing device (52);
- a microprocessor as a feature of the data processing unit (76);
- a graphical user interface (86);
- means of wireless communication.

13. Use of a system according to any one of claims 1 to 12 for assessing the visual appearance of a reflective surface (50) of a vehicle.

14. Method for assessing the visual appearance of a reflective surface (50) of a vehicle, the method comprising providing a system (38) according to any one of claims 1 to 12, and the method further comprising at least the steps of:
a) positioning a contact section (48) of the system (38) on the reflective surface (50) of the vehicle;
b) displaying at least one test image (66) onto the reflective surface (50) by the visual output device (42) of the system (38);
c) tuning an adjustable focal point position (54) of the visual capturing device (52) of the system (38) to the reflective surface (50) as one capturing position (60);
d) capturing at least one image (70) in the one capturing position (60) by the visual capturing device (52);
e) tuning the adjustable focal point position (54) to a complementary capturing position (62) that allows for clear capturing of the test image (66) as a reflection (68) from the reflective surface (50);
f) capturing at least one complementary image (72) in the complementary capturing position (62) by the visual capturing device;
g) deriving objective quality parameters (88) of the reflective surface (50) from the one image (70) and from the complementary image (72) by the evaluation algorithm (80) of the data processing unit (76) of the system; and
h) comparing the objective quality parameters (88) with the data (82) of the database (78) of the data processing unit (76) representing correlation between the visual appearance of reflective reference surfaces and the objective quality parameters (88) of the reflective reference surfaces by the evaluation algorithm (80) to assess the visual appearance of the reflective surface (50) based on average human perception.

## Patentansprüche

1. System (38) zur Beurteilung des visuellen Erscheinungsbildes einer reflektierenden Oberfläche (50), mindestens umfassend:
a) eine visuelle Ausgabevorrichtung (42), die eingerichtet ist, um mindestens ein Testbild (66) auf die reflektierende Oberfläche (50) anzuzeigen;
b) eine visuelle Erfassungsvorrichtung (52), umfassend eine verstellbare Fokalpunktposition (54);
- wobei die verstellbare Fokalpunktposition (54) auf die reflektierende Oberfläche (50) als eine Erfassungsposition (60) und auf eine komplementäre Erfassungsposition (62) einstellbar ist, die eindeutiges Erfassen des Testbildes (66) als eine Reflexion (68) von der reflektierenden Oberfläche (50) ermöglicht; und
- wobei die visuelle Erfassungsvorrichtung (52) eingerichtet ist, um mindestens ein Bild (70) in der einen Erfassungsposition (60) zu erfassen und mindestens ein komplementäres Bild (72) in der komplementären Erfassungsposition (62) zu erfassen;
c) eine Datenverarbeitungseinheit (76), umfassend eine Datenbank (78) und einen Bewertungsalgorithmus (80);
- wobei die Datenbank (78) mit Daten (82) ausgestattet ist, die eine Korrelation zwischen einem visuellen Erscheinungsbild von reflektierenden Referenzoberflächen und objektiven Qualitätsparametern (88) der reflektierenden Referenzoberflächen darstellen;
und
- wobei der Bewertungsalgorithmus (80) eingerichtet ist, um die objektiven Qualitätsparameter (88) der reflektierenden Oberfläche (50) von dem einen Bild (70) und von dem komplementären Bild (72) abzuleiten und die objektiven Qualitätsparameter (88) mit den Daten (82) der Datenbank (78) zu vergleichen, um das visuelle Erscheinungsbild der reflektierenden Oberfläche (50) basierend auf einer durchschnittlichen menschlichen Wahrnehmung zu beurteilen,
wobei
die Daten (82) der Datenbank (78) eine logische Verknüpfung von Folgendem umfassen:
- statistisch bestätigten Ergebnissen von Zielgruppenbefragung in Bezug auf das visuelle Erscheinungsbild reflektierender Referenzoberflächen; und
- objektive Qualitätsparameter (88) der reflektierenden Referenzoberflächen.

2. System nach Anspruch 1, wobei die Datenverarbeitungseinheit (78) einen Steuerungsalgorithmus (90) umfasst, der eingerichtet ist, um automatisch die folgenden Schritte zu steuern:
a) Anzeigen des mindestens einen Testbildes (66);
b) Einstellen der verstellbaren Fokalpunktposition (54) auf die eine Erfassungsposition (60);
c) Erfassen mindestens eines Bildes (70) in der einen Erfassungsposition (60);
d) Einstellen der verstellbaren Fokalpunktposition (54) auf die komplementäre Erfassungsposition (62);
e) Erfassen mindestens eines komplementären Bildes (72) in der komplementären Erfassungsposition (62);
f) Ableiten objektiver Qualitätsparameter (88) der reflektierenden Oberfläche (50) von dem einen Bild (70) und von dem komplementären Bild (72);
g) Vergleichen der objektiven Qualitätsparameter (88) mit den Daten (82) der Datenbank (78), um das visuelle Erscheinungsbild der reflektierenden Oberfläche (50) zu bewerten; und
h) Ausgeben eines Ergebnisses, das für das visuelle Erscheinungsbild der reflektierenden Oberfläche (50) repräsentativ ist.

3. System nach Anspruch 2, wobei der Steuerungsalgorithmus (90) eingerichtet ist zum:
- Wiederholen der Schritte a) bis g) unter Verwendung unterschiedlicher Testbilder (64) und
- Kombinieren der Ergebnisse aller Iterationen von Schritt g) und
- Ausgeben eines Ergebnisses, das für das visuelle Erscheinungsbild der reflektierenden Oberfläche (50) repräsentativ ist.

4. System nach einem der vorstehenden Ansprüche, umfassend einen Kontaktabschnitt (48), der eingerichtet ist, um das System (38) auf der reflektierenden Oberfläche (50) zu positionieren.

5. System nach einem der vorstehenden Ansprüche, wobei die visuelle Erfassungsvorrichtung (52) einen Mechanismus (56) umfasst, der eingerichtet ist, um die verstellbare Fokalpunktposition (54) automatisch einzustellen.

6. System nach einem der vorstehenden Ansprüche, wobei die visuelle Erfassungsvorrichtung (52) eingerichtet ist, um ein Erfassen des einen Bildes (70) in der einen Erfassungsposition (60) und des komplementären Bildes (72) in der komplementären Erfassungsposition (62) zu ermöglichen, sodass ein Bereich (74) der reflektierenden Oberfläche (50), der von dem einen Bild (70) und dem komplementären Bild (72) bedeckt ist, 20 mm mal 10 mm bis 30 mm mal 20 mm misst.

7. System nach einem der vorstehenden Ansprüche, wobei die visuelle Erfassungsvorrichtung (52) eingerichtet ist, um die verstellbare Fokalpunktposition (54) mit einer Genauigkeit von mindestens +/- 0,3 mm einzustellen.

8. System nach einem der vorstehenden Ansprüche, wobei die verstellbare Fokalpunktposition (54) in weniger als 500 ms einstellbar ist.

9. System nach einem der vorstehenden Ansprüche, wobei die visuelle Erfassungsvorrichtung (52) einen Bildsensor umfasst, der eine Pixelgröße von weniger als 50 µm umfasst.

10. System nach einem der vorstehenden Ansprüche, wobei das System (38) ein Handgerät (40) ist.

11. System nach Anspruch 10, wobei Abmessungen des Systems (38) nicht mehr als 200 mm mal 150 mm mal 60 mm messen und/oder ein Gewicht des Systems (38) nicht mehr als 1,5 kg misst und/oder das System (38) eine Energiequelle umfasst.

12. System nach einem der vorstehenden Ansprüche, wobei das System (38) mindestens eines der folgenden Elemente umfasst:
- eine Anzeige als ein Merkmal der visuellen Ausgabevorrichtung (42);
- eine Kamera als ein Merkmal der visuellen Erfassungsvorrichtung (52);
- einen Mikroprozessor als ein Merkmal der Datenverarbeitungseinheit (76);
- eine graphische Benutzerschnittstelle (86);
- Mittel der drahtlosen Kommunikation.

13. Verwendung eines Systems nach einem der Ansprüche 1 bis 12 zur Beurteilung des visuellen Erscheinungsbildes einer reflektierenden Oberfläche (50) eines Fahrzeugs.

14. Verfahren zum Bewerten des visuellen Erscheinungsbildes einer reflektierenden Oberfläche (50) eines Fahrzeugs, wobei das Verfahren das Bereitstellen eines Systems (38) nach einem der Ansprüche 1 bis 12 umfasst und wobei das Verfahren ferner mindestens die folgenden Schritte umfasst:
a) Positionieren eines Kontaktabschnitts (48) des Systems (38) auf der reflektierenden Oberfläche (50) des Fahrzeugs;
b) Anzeigen mindestens eines Testbildes (66) auf die reflektierende Oberfläche (50) durch die visuelle Ausgabevorrichtung (42) des Systems (38);
c) Einstellen einer verstellbaren Fokalpunktposition (54) der visuellen Erfassungsvorrichtung (52) des Systems (38) auf die reflektierende Oberfläche (50) als eine Erfassungsposition (60);
d) Erfassen mindestens eines Bildes (70) in der einen Erfassungsposition (60) durch die visuelle Erfassungsvorrichtung (52);
e) Einstellen der verstellbaren Fokalpunktposition (54) auf eine komplementäre Erfassungsposition (62), die eindeutiges Erfassen des Testbildes (66) als eine Reflexion (68) von der reflektierenden Oberfläche (50) ermöglicht;
f) Erfassen mindestens eines komplementären Bildes (72) in der komplementären Erfassungsposition (62) durch die visuelle Erfassungsvorrichtung;
g) Ableiten objektiver Qualitätsparameter (88) der reflektierenden Oberfläche (50) von dem einen Bild (70) und von dem komplementären Bild (72) durch den Bewertungsalgorithmus (80) der Datenverarbeitungseinheit (76) des Systems und
h) Vergleichen der objektiven Qualitätsparameter (88) mit den Daten (82) der Datenbank (78) der Datenverarbeitungseinheit (76), die eine Korrelation zwischen dem visuellen Erscheinungsbild reflektierender Referenzoberflächen und den objektiven Qualitätsparametern (88) der reflektierenden Referenzoberflächen darstellen, durch den Bewertungsalgorithmus (80), um das visuelle Erscheinungsbild der reflektierenden Oberfläche (50) basierend auf einer durchschnittlichen menschlichen Wahrnehmung zu beurteilen.

## Revendications

1. Système (38) pour évaluer l'aspect visuel d'une surface réfléchissante (50), comprenant au moins :
a) un dispositif de sortie visuelle (42), conçu pour afficher au moins une image test (66) sur la surface réfléchissante (50) ;
b) un dispositif de capture visuelle (52), comprenant une position de point focal réglable (54) ;
- dans lequel la position de point focal réglable (54) est ajustable à la surface réfléchissante (50) en tant qu'une position de capture (60) et à une position de capture complémentaire (62) qui permet une capture claire de l'image test (66) en tant que réflexion (68) par la surface réfléchissante (50) ; et
- dans lequel le dispositif de capture visuelle (52) est conçu pour capturer au moins une image (70) dans ladite position de capture (60) et pour capturer au moins une image complémentaire (72) dans la position de capture complémentaire (62) ;
c) une unité de traitement de données (76), comprenant une base de données (78) et un algorithme d'évaluation (80) ;
- dans lequel la base de données (78) est pourvue de données (82) représentant une corrélation entre l'aspect visuel de surfaces réfléchissantes de référence et des paramètres de qualité objectifs (88) des surfaces réfléchissantes de référence ;
et
- dans lequel l'algorithme d'évaluation (80) est conçu pour dériver les paramètres de qualité objectifs (88) de la surface réfléchissante (50) à partir de ladite image (70) et à partir de l'image complémentaire (72) et pour comparer les paramètres de qualité objectifs (88) aux données (82) de la base de données (78) pour évaluer l'aspect visuel de la surface réfléchissante (50) sur la base d'une perception humaine moyenne,
dans lequel
les données (82) de la base de données (78) comprennent une conjonction logique de :
- résultats statistiquement confirmés d'interrogation de groupe cible concernant l'aspect visuel de surfaces réfléchissantes de référence ; et
- de paramètres de qualité objectifs (88) des surfaces réfléchissantes de référence.

2. Système selon la revendication 1, dans lequel l'unité de traitement de données (78) comprend un algorithme de commande (90) conçu pour commander automatiquement les étapes consistant à :
a) afficher l'au moins une image test (66) ;
b) ajuster la position de point focal réglable (54) à ladite position de capture (60) ;
c) capturer au moins une image (70) dans ladite position de capture (60) ;
d) ajuster la position de point focal réglable (54) à la position de capture complémentaire (62) ;
e) capturer au moins une image complémentaire (72) dans la position de capture complémentaire (62) ;
f) dériver des paramètres de qualité objectifs (88) de la surface réfléchissante (50) à partir de ladite image (70) et à partir de l'image complémentaire (72) ;
g) comparer les paramètres de qualité objectifs (88) aux données (82) de la base de données (78) pour évaluer l'aspect visuel de la surface réfléchissante (50) ; et
h) délivrer en sortie un résultat représentatif de l'aspect visuel de la surface réfléchissante (50).

3. Système selon la revendication 2, dans lequel l'algorithme de commande (90) est conçu pour :
- répéter les étapes a) à g) en utilisant différentes images test (64) ; et
- combiner les résultats de toutes les itérations de l'étape g) ; et
- délivrer en sortie un résultat représentatif de l'aspect visuel de la surface réfléchissante (50).

4. Système selon l'une des revendications précédentes, comprenant une section de contact (48) conçue pour positionner le système (38) sur la surface réfléchissante (50).

5. Système selon l'une des revendications précédentes, dans lequel le dispositif de capture visuelle (52) comprend un mécanisme (56), conçu pour ajuster automatiquement la position de point focal réglable (54).

6. Système selon l'une des revendications précédentes, dans lequel le dispositif de capture visuelle (52) est conçu pour permettre la capture de ladite image (70) dans ladite position de capture (60) et de l'image complémentaire (72) dans la position de capture complémentaire (62) de sorte qu'une aire (74) de la surface réfléchissante (50) couverte par ladite image (70) et l'image complémentaire (72) mesure 20 mm sur 10 mm à 30 mm sur 20 mm.

7. Système selon l'une des revendications précédentes, dans lequel le dispositif de capture visuelle (52) est conçu pour ajuster la position de point focal réglable (54) avec une précision d'au moins +/- 0,3 mm.

8. Système selon l'une des revendications précédentes, dans lequel la position de point focal réglable (54) est ajustable en moins de 500 ms.

9. Système selon l'une des revendications précédentes, dans lequel le dispositif de capture visuelle (52) comprend un capteur d'image comprenant une taille de pixel inférieure à 50 µm.

10. Système selon l'une des revendications précédentes, dans lequel le système (38) est une unité portative (40).

11. Système selon la revendication 10, dans lequel les dimensions du système (38) ne mesurent pas plus de 200 mm sur 150 mm sur 60 mm et/ou un poids du système (38) ne vaut pas plus de 1,5 kg et/ou le système (38) comprend une source d'énergie.

12. Système selon l'une des revendications précédentes, dans lequel le système (38) comprend au moins l'un des éléments suivants :
- un affichage en tant qu'élément du dispositif de sortie visuelle (42) ;
- une caméra en tant qu'élément du dispositif de capture visuelle (52) ;
- un microprocesseur en tant qu'élément de l'unité de traitement de données(76);
- une interface utilisateur graphique (86) ;
- un moyen de communication sans fil.

13. Utilisation d'un système selon l'une quelconque des revendications 1 à 12 pour évaluer l'aspect visuel d'une surface réfléchissante (50) d'un véhicule.

14. Procédé pour évaluer l'aspect visuel d'une surface réfléchissante (50) d'un véhicule, le procédé comprenant la fourniture d'un système (38) selon l'une quelconque des revendications 1 à 12 et le procédé comprenant en outre au moins les étapes consistant à :
a) positionner une section de contact (48) du système (38) sur la surface réfléchissante (50) du véhicule ;
b) afficher au moins une image test (66) sur la surface réfléchissante (50) par le dispositif de sortie visuelle (42) du système (38) ;
c) ajuster une position de point focal réglable (54) du dispositif de capture visuelle (52) du système (38) à la surface réfléchissante (50) en tant que position de capture (60) ;
d) capturer au moins une image (70) dans ladite position de capture (60) par le dispositif de capture visuelle (52) ;
e) ajuster la position de point focal réglable (54) à une position de capture complémentaire (62) qui permet une capture claire de l'image test (66) en tant que réflexion (68) par la surface réfléchissante (50) ;
f) capturer au moins une image complémentaire (72) dans la position de capture complémentaire (62) par le dispositif de capture visuelle ;
g) dériver des paramètres de qualité objectifs (88) de la surface réfléchissante (50) à partir de ladite image (70) et à partir de l'image complémentaire (72) par l'algorithme d'évaluation (80) de l'unité de traitement de données (76) du système ; et
h) comparer les paramètres de qualité objectifs (88) aux données (82) de la base de données (78) de l'unité de traitement de données (76) représentant une corrélation entre l'aspect visuel de surfaces réfléchissantes de référence et les paramètres de qualité objectifs (88) des surfaces réfléchissantes de référence par l'algorithme d'évaluation (80) pour évaluer l'aspect visuel de la surface réfléchissante (50) sur la base d'une perception humaine moyenne.
